# EUROPEAN PATENT APPLICATION

(11) **EP 4 578 843 A1**
(43) Date of publication of application: **02.07.2025**
(21) Application number: 24213877.4
(22) Date of filing: 19.11.2024
(51) Int. Cl.: C04B 35/01, C04B 35/46, C04B 35/468, H01G 4/12, H01G 4/30, H01G 4/012, H01G 4/224

(54) **MULTILAYER ELECTRONIC COMPONENT**

(30) Priority: 26.12.2023 KR 20230191759
(71) Applicant: Samsung Electro-Mechanics Co., Ltd., Gyeonggi-do (KR)
(72) Inventor: Lee, Geon Yong, Suwon-si, Gyeonggi-do (KR)
(74) Representative: Grünecker Patent- und Rechtsanwälte PartG mbB

(57) **Abstract**

A multilayer electronic component includes a body including a dielectric layer and internal electrodes alternately disposed with the dielectric layer and external electrodes disposed on the body, wherein, when a widthwise central portion of the dielectric layer is a first region and widthwise end portions of the dielectric layer are second regions, the first region has a higher permittivity than the second regions.

## Description

### CROSS-REFERENCE TO RELATED APPLICATION(S)

This application claims the benefit of priority to Korean Patent Application No. 10-2023-0191759 filed on December 26, 2023 in the Korean Intellectual Property Office, the disclosure of which is incorporated herein by reference in its entirety.

### TECHNICAL FIELD

The present disclosure relates to a multilayer electronic component.

### BACKGROUND

A multilayer ceramic capacitor, a multilayer chip electronic component, is a chip-shaped condenser mounted on the printed circuit boards of various electronic products such as display devices, liquid crystal displays (LCDs), plasma display panels (PDPs) and the like, for example, as well as computers, smartphones, mobile phones, and the like, to serve to charge and discharge electricity therein or therefrom.

Since multilayer ceramic capacitors (MLCCs) have advantages such as a small size, high capacitance, ease of mounting, or the like, multilayer ceramic capacitors may be used as components in various electronic devices, and as various electronic devices, such as computers and mobile devices, become smaller and have higher performance, demand for miniaturization and high capacitance of multilayer ceramic capacitors has increased.

In addition, as the application of multilayer ceramic capacitors to automotive electrical components has increased, high reliability in various environments is required.

Multilayer ceramic capacitors are generally manufactured by stacking and compressing ceramic green sheets with printed internal electrodes thereon and then performing cutting and sintering processes. A portion in which the internal electrodes are printed and a portion in which the internal electrodes are not printed are formed with a step due to a thickness of internal electrode patterns, and the step may become larger as the number of layers increases.

In addition, a gap may occur in the portion in which the internal electrode is not printed during the stacking operation, and a portion of the ceramic green sheet and the internal electrode may move into the gap during the compressing operation so a thickness of the dielectric layer and the internal electrode in a region adjacent to the portion in which the internal electrode is not printed may become thinner. As a result, a high electric field may be generated at a widthwise end portion of the dielectric layer compared to a widthwise central portion, which may degrade reliability.

### SUMMARY

An aspect of the present disclosure is to provide a multilayer electronic component having excellent reliability.

Another aspect of the present disclosure is to provide a multilayer electronic component having excellent withstand voltage.

Another aspect of the present disclosure is to secure high capacitance.

However, the object of the present disclosure is not limited to the aforementioned contents and may be more easily understood in the process of describing specific exemplary embodiments in the present disclosure.

According to an aspect of the present disclosure, a multilayer electronic component includes a body including a dielectric layer and internal electrodes alternately disposed with the dielectric layer and external electrodes disposed on length-wise opposing surfaces of the body, wherein, when a widthwise central portion of the dielectric layer is a first region and widthwise end portions of the dielectric layer are second regions, the first region has a higher permittivity than the second regions.

### BRIEF DESCRIPTION OF DRAWINGS

The and other aspects, features, and advantages of the present disclosure will be more clearly understood from the following detailed description, taken in conjunction with the accompanying drawings, in which:
FIG. 1 is a schematic perspective view of a multilayer electronic component according to an exemplary embodiment in the present disclosure;
FIG. 2 is a cross-sectional view taken along line I-I' of FIG. 1;
FIG. 3 is a cross-sectional view taken along line II-II' of FIG. 1;
FIG. 4 is an exploded perspective view of a body of FIG. 1;
FIG. 5 is a cross-sectional view taken along line III-III' of FIG. 1;
FIG. 6 is a view of FIG. 5 excluding internal electrodes;
FIG. 7 is a graph illustrating a change in permittivity according to a widthwise position;
FIG. 8 is a view illustrating a method for manufacturing a ceramic green sheet to manufacture a multilayer electronic component according to an exemplary embodiment in the present disclosure;
FIG. 9 is a view illustrating a ceramic green sheet on which internal electrodes are printed; and
FIG. 10 is a view illustrating a cross-section of a stack in which the ceramic green sheet of FIG. 9 is stacked and compressed.

### DETAILED DESCRIPTION

Hereinafter, exemplary embodiments of the present inventive concept will be described in detail with reference to the accompanying drawings. The inventive concept may, however, be exemplified in many different forms and should not be construed as being limited to the specific exemplary embodiments set forth herein. Rather, these exemplary embodiments are provided so that this disclosure will be thorough and complete, and will fully convey the scope of the inventive concept to those skilled in the art. In the drawings, the shapes and dimensions of elements may be exaggerated for clarity, and the same reference numerals will be used throughout to designate the same or like elements.

To clarify the present disclosure, portions irrespective of description are omitted and like numbers refer to like elements throughout the specification, and in the drawings, the thickness of layers, films, panels, regions, etc., are exaggerated for clarity. Also, in the drawings, like reference numerals refer to like elements although they are illustrated in different drawings. Throughout the specification, unless explicitly described to the contrary, the word "comprise" and variations, such as "comprises" or "including," will be understood to imply the inclusion of stated elements but not the exclusion of any other elements.

In the drawing, a first direction may be defined as a stacking direction or thickness (T) direction, a second direction as a length (L) direction, and a third direction as a width (W) direction.

### Multilayer Electronic Component

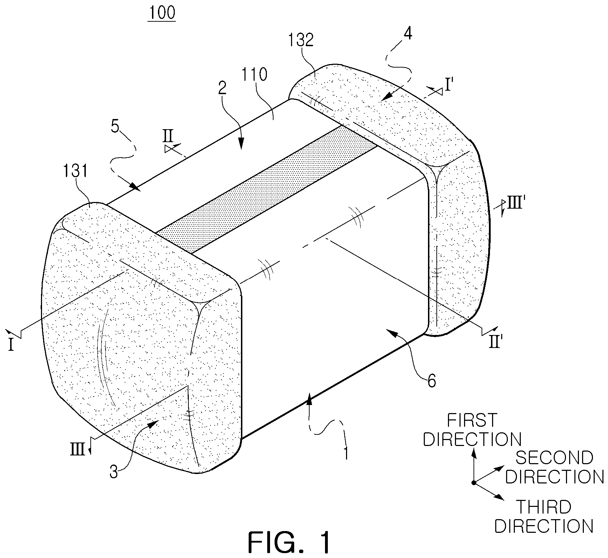

FIG. 1 is a schematic perspective view of a multilayer electronic component according to an exemplary embodiment in the present disclosure.

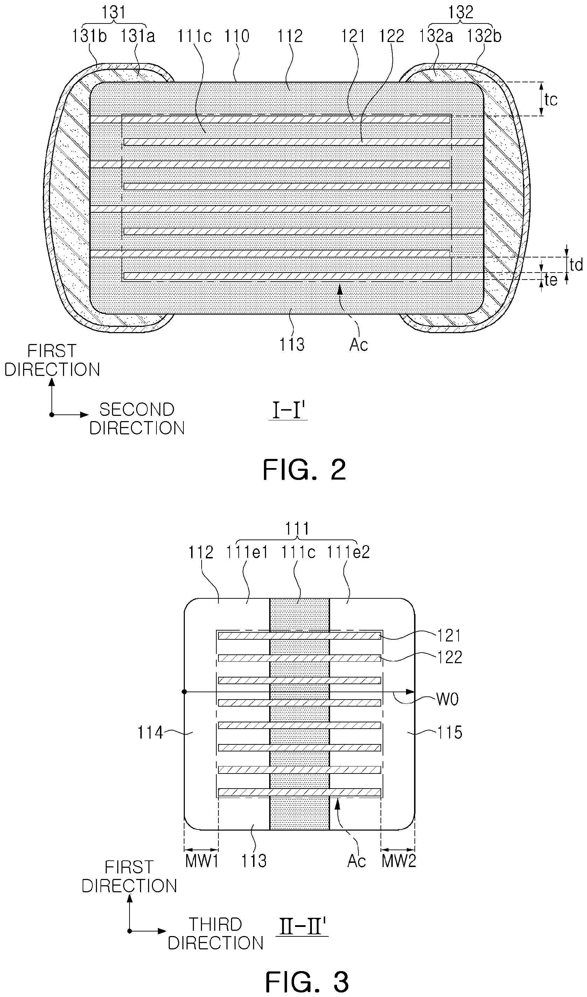

FIG. 2 is a cross-sectional view taken along line I-I' of FIG. 1.

FIG. 3 is a cross-sectional view taken along line II-II' of FIG. 1.

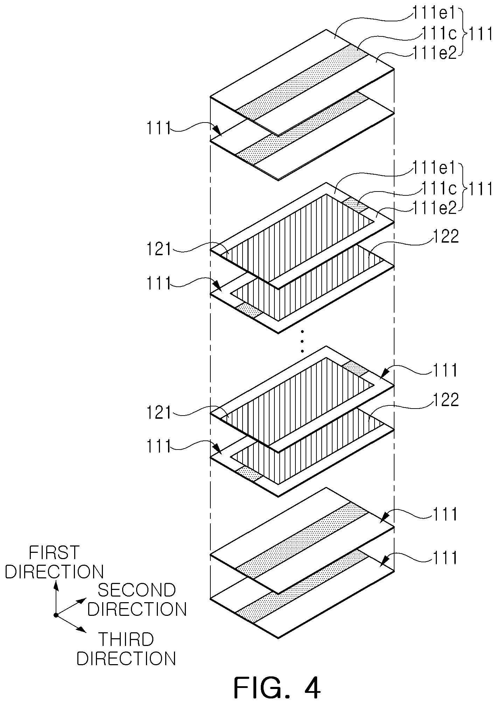

FIG. 4 is an exploded perspective view of a body of FIG. 1.

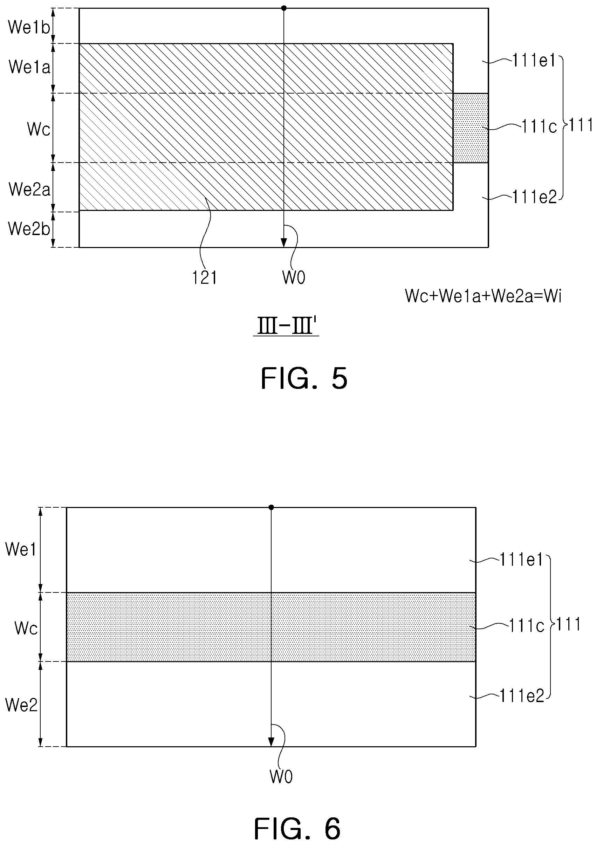

FIG. 5 is a cross-sectional view taken along line III-III' of FIG. 1.

FIG. 6 is a view of FIG. 5 excluding internal electrodes.

Hereinafter, a multilayer electronic component 100 according to an exemplary embodiment in the present disclosure will be described in detail with reference to FIGS. 1 to 6. In addition, a multilayer ceramic capacitor (hereinafter referred to as 'MLCC') is described as an example of a multilayer electronic component, but the present disclosure is not limited thereto and may be applied to various multilayer electronic components using ceramic materials, such as inductors, piezoelectric elements, varistors, or thermistors.

The multilayer electronic component 100 according to an exemplary embodiment in the present disclosure may include a body 110 including a dielectric layer 111 and internal electrodes 121 and 122 alternately disposed with the dielectric layer; and external electrodes 131 and 132 disposed on the body, wherein, when a widthwise central portion of the dielectric layer is a first region 111c and widthwise end portions of the dielectric layer are second regions 111e1 and 111e2, the first region may have higher permittivity than the second region.

Multilayer ceramic capacitors are generally manufactured by stacking and compressing ceramic green sheets with printed internal electrodes thereon and then performing cutting and sintering processes. A portion in which the internal electrodes are printed and a portion in which the internal electrodes are not printed are formed with a step due to a thickness of internal electrode patterns, and the step may become larger as the number of layers increases.

In addition, a gap may occur in the portion in which the internal electrode is not printed during the stacking operation, and a portion of the ceramic green sheet and the internal electrode may move into the gap during the compressing operation so a thickness of the dielectric layer and the internal electrode in a region adjacent to the portion in which the internal electrode is not printed may become thinner. As a result, a high electric field may be generated at a widthwise end portion of the dielectric layer compared to a widthwise central portion, which may degrade reliability. Specifically, dielectric breakdown may occur at a low voltage at the widthwise end portions compared to the widthwise central portion of the dielectric layer and the lifespan may be shortened during a highly accelerated life test (HALT).

Meanwhile, according to an exemplary embodiment in the present disclosure, by making the widthwise central portion of the dielectric layer have a higher permittivity than the widthwise end portions, reliability may be improved while high capacitance is easily secured. That is, while the first region 111c of the dielectric layer has a high permittivity to secure high capacitance, the second regions 111e1 and 111e2 of the dielectric layer may have a relatively low permittivity compared to the first region, thereby improving a withstand voltage at the widthwise end portions of the dielectric layer to improv reliability.

Hereinafter, each component included in the multilayer electronic component 100 according to an exemplary embodiment in the present disclosure will be described.

In the body 110, the dielectric layers 111 and the internal electrodes 121 and 122 may be alternately stacked.

Although a specific shape of the body 110 is not particularly limited, as shown, the body 110 may have a hexahedral shape or a shape similar thereto. Due to the shrinkage of ceramic powder particles included in the body 110 during a sintering process, the body 110 may not have a perfectly straight hexahedral shape but may have a substantially hexahedral shape.

The body 110 may have first and second surfaces 1 and 2 opposing each other in the first direction, third and fourth surfaces connected to the first and second surfaces 1 and 2 and opposing each other in the second direction, and fifth and sixth surfaces connected to the first and second surfaces 1 and 2, connected to the third and fourth surfaces 3 and 4 and opposing each other in the third direction. The first surface 1 may be a mounting face disposed to face a substrate when mounted on the substrate.

As margin regions in which the internal electrodes 121 and 122 are not disposed on the dielectric layer 111 overlaps, a step may occur due to the thickness of the internal electrodes 121 and 122, and the corner connecting the first surface to the third to fifth surfaces and/or the corner connecting the second surface to the third to fifth surfaces may have a shape contracted toward the center of the body 110 in the first direction when viewed based on the first surface or the second surface. Alternatively, due to a shrinkage behavior during a sintering process of the body, the corner connecting the first surface 1 to the third to sixth surfaces 3, 4, 5, and 6 and/or the corner connecting the second surface 2 to the third to sixth surfaces 3, 4, 5, and 6 may have a shape contracted toward the center of the body 110 in the first direction when viewed based on the first surface or the second surface. Alternatively, in order to prevent chipping defects, etc., the corners connecting each surface of the body 110 may be rounded by performing a separate process so that the corners connecting the first surface to the third to sixth surfaces and/or the corners connecting the second surface to the third to sixth surfaces may have a round shape.

The plurality of dielectric layers 111 forming the body 110 are in a sintered state, and adjacent dielectric layers 111 may be integrated such that boundaries therebetween may not be readily apparent without using a scanning electron microscope (SEM). The number of stacked dielectric layers may not be particularly limited and may be determined in consideration of the size of the multilayer electronic component. For example, the body may be formed by stacking 400 or more dielectric layers.

The body 110 may include a capacitance formation portion Ac including the first internal electrodes 121 and second internal electrodes 122 disposed inside the body 110 and opposing each other with the dielectric layer 111 therebetween to form capacitance and cover portions 112 and 113 formed above and below the capacitance formation portion Ac in the first direction.

In addition, the capacitance formation portion Ac contributes to the capacitance formation of the capacitor, and may be formed by repeatedly stacking a plurality of first and second internal electrodes 121 and 122 with the dielectric layer 111 therebetween.

The cover portions 112 and 113 may include an upper cover portion 112 disposed above the capacitance formation portion Ac in the first direction and a lower cover portion 113 disposed below the capacitance formation portion Ac in the first direction.

The upper cover portion 112 and the lower cover portion 113 may be formed by stacking a single dielectric layer or two or more dielectric layers on the upper and lower surfaces of the capacitance formation portion Ac in the thickness direction and may basically serve to prevent damage to the internal electrodes due to physical or chemical stress.

The upper cover portion 112 and the lower cover portion 113 may not include an internal electrode and may include the same material as the dielectric layer 111.

That is, the upper cover portion 112 and the lower cover portion 113 may include a ceramic material, for example, a barium titanate (BaTiO₃)-based ceramic material.

Meanwhile, a thickness of the cover portions 112 and 113 may not be limited. For example, an average thickness tc of the cover portions 112 and 113 may be 200 um or less.

The average thickness tc of the cover portion 112 and 113 may refer to the size in the first direction and may be an average value of the size of the cover portion 112 and 113 in the first direction measured at five equally spaced points above or below the capacitance formation portion Ac.

In addition, margin portions 114 and 115 may be disposed on the side surface of the capacitance formation portion Ac.

The margin portions 114 and 115 may include a first margin portion 114 disposed on the fifth surface 5 of the body 110 and a second margin portion 115 disposed on the sixth surface 6. That is, the margin portions 114 and 115 may be disposed on both end surfaces of the ceramic body 110 in the width direction.

As illustrated in FIG. 3, the margin portions 114 and 115 may refer to a region between both ends of the first and second internal electrodes 121 and 122 and a boundary surface of the body 110 in a cross-section of the body 110 in the width-thickness (W-T) direction.

The margin portions 114 and 115 may serve to prevent damage to the internal electrode due to physical or chemical stress.

The margin portions 114 and 115 may be formed by forming the internal electrodes by applying a conductive paste except for a region in which the margin portion is to be formed on the ceramic green sheet.

Meanwhile, the width of the margin portions 114 and 115 may not be limited. For example, an average width of the margin portions 114 and 115 may be 200 um or less.

The average width of the margin portions 114 and 115 may refer to an average size MW1 of a region in which the internal electrode is spaced from the fifth surface in the third direction and an average size MW2 of a region in which the internal electrode is spaced from the sixth surface in the third direction and may be an average value of the size of the margin portions 114 and 115 measured at five equally spaced points on the side surface of the capacitance formation portion Ac in the third direction.

Therefore, in an exemplary embodiment, the average sizes MW1 and MW2 of the region in which the internal electrodes 121 and 122 are spaced apart from the fifth and sixth surfaces may be 200 um or less, respectively.

When the widthwise central portion of the dielectric layer 111 is the first region 111c and the widthwise end portions of the dielectric layer are the second regions 111e1 and 111e2, the first region may have a higher permittivity than the second region. The first region 111c of the dielectric layer may have a high permittivity to secure high capacitance, while the second regions 111e1 and 111e2 of the dielectric layer may have a relatively low permittivity compared to the first region, thereby improving the withstand voltage at the widthwise end portions of the dielectric layer to enhance reliability. The second regions 111e1 and 111e2 may include a 2-1 region 111e1 disposed at one end portion of the dielectric layer in the width direction and a 2-2 region 111e2 disposed at the other end portion of the dielectric layer in the width direction.

In an exemplary embodiment, the first region 111c may be disposed to connect the third surface and the fourth surface in the second direction, and the second regions 111e1 and 111e2 may be disposed to connect the third surface and the fourth surface in the second direction.

Referring to FIG. 2, since the first region 111c is disposed to connect the third surface and the fourth surface in the second direction, only the first region 111c among the first and second regions may be observed in the cross-section in the first and second direction cut at the center of the body 110 in the third direction. In addition, only the second regions 111e1 and 111e2 among the first and second regions may be observed in the cross-section in first and second directions cut at one point in the third direction in which the second regions 111e1 and 111e2 is disposed.

In an exemplary embodiment, at least a portion of the second regions 111e1 and 111e2 may be disposed to overlap the internal electrode 121 and 122 in the first direction. Since an electric field is mainly applied to the portion of the second regions 111e1 and 111e2 overlapping the internal electrode 121 and 122 in the first direction, the effect of improving the withstand voltage due to the second regions 111e1 and 111e2 may be further improved.

In an exemplary embodiment, the second regions 111e1 and 111e2 may be disposed in the margin portions 114 and 115 and the capacitance formation portion Ac. Since the electric field is mainly applied to the portions of the second regions 111e1 and 111e2 disposed in the capacitance formation portion Ac, the effect of improving the withstand voltage due to the second regions 111e1 and 111e2 may be further improved.

In an exemplary embodiment, among the second regions 111e1 and 111e2, regions disposed in the capacitance formation portion Ac are 2a regions, and regions disposed in the margin portions 114 and 115 are 2b regions, the 2a regions may have a higher permittivity than the 2b regions.

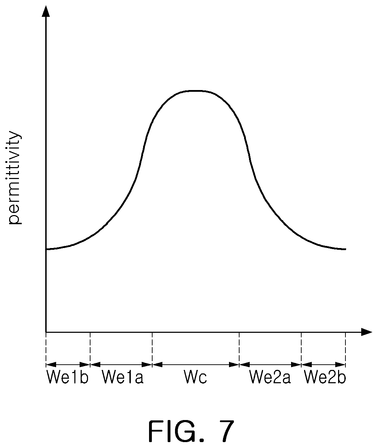

FIG. 7 is a graph illustrating a change in permittivity according to a widthwise position. Specifically, it is a graph illustrating a change in permittivity along a W0 line illustrated in FIG. 3 and FIG. 5.

Referring to FIG. 7, the permittivity gradually increases from the 2-1 region 111e1 toward the first region 111c, and a rate of increase in the permittivity may also increase. The rate of increase in the permittivity may be maximum at the boundary between the 2-1 region 111e1 and the first region 111c. The rate of increase in the permittivity in the first region 111c decreases from the 2-1 region 111e1 toward the 2-2 region 111e2, and after having the maximum permittivity in the center of the first region 111c, the permittivity may gradually decrease toward the 2-2 region 111e2. A rate of decrease in the permittivity may be maximum at the boundary between the first region 111c and the 2-2 region 111e2. In the 2-2 region 111e2, the permittivity may gradually decrease farther away from the first region 111c, and the rate of decrease in the permittivity may also decrease.

Therefore, the permittivity of the first region 111c may gradually decrease toward the second regions 111e1 and 111e2.

In addition, the permittivity of the second region 111e1 and 111e2 may gradually decrease farther away from the first region 111c.

At this time, an average permittivity of the first region 111c may be in a range from 1.05 times to 1.6 times an average permittivity of the second region 111e1 and 111e2. Accordingly, the capacitance improvement effect and the withstand voltage improvement effect may be further improved.

If the average permittivity of the first region 111c is less than 1.05 times that of the second regions 111e1 and 111e2, the capacitance improvement effect and/or the withstand voltage improvement effect may be insufficient, and if it exceeds 1.6 times, a shrinkage difference between the first region and the second region during sintering may increase, which may cause a degradation in the connectivity of the internal electrodes, cracks, etc.

The respective values of the average permittivity of the first region 111c and the average permittivity of the second regions 111e1 and 111e2 may not be limited. For example, the average permittivity of the first region 111c may be in a range from 2400 to 3800, and the average permittivity of the second regions 111e1 and 111e2 may be in a range from 2300 to 3700.

Meanwhile, in order to clarify the first region 111c and the second regions 111e1 and 111e2, the first region 111c is shaded in FIGS. 1 to 6, and additives of the slurry forming the first region 111c and the slurry forming the second regions 111e1 and 111e2 may be adjusted so that they may be distinguished with the naked eye.

However, the first region 111c and the second regions 111e1 and 111e2 may be difficult to distinguish with the naked eye.

In an exemplary embodiment, the dielectric layer may have a maximum change rate in permittivity at a point at which the first region 111c meets the second regions 111e1 and 111e2. Accordingly, even when the first region 111c and the second regions 111e1 and 111e2 are difficult to distinguish with the naked eye, the first region 111c and the second regions 111e1 and 111e2 may be distinguished. In other words, a point at which the absolute value of the slope of the permittivity graph of FIG. 7 is maximum may be set as the boundary between the first region 111c and the second regions 111e1 and 111e2.

In addition, the rate of decrease in the permittivity of the second regions 111e1 and 111e2 may decrease in a direction away from the first region 111c.

In addition, the rate of increase in the permittivity of the first region 111c may decrease in a direction away from the second regions 111e1 and 111e2.

The method for measuring the permittivity by widthwise position of the dielectric layer 111 is not particularly limited. For example, the permittivity of the dielectric layer 111 by widthwise position may be obtained by dividing the multilayer electronic component 100 into a certain length unit in the width direction and measuring the permittivity by unit length.

In addition, when the permittivity in the width direction is implemented to be different by adjusting the additive concentration, the cross-section of the multilayer electronic component 100 in the first and third directions may be analyzed by laser ablation-inductively coupled plasma (LA-ICP) to measure an additive concentration distribution, thereby indirectly confirming the change in permittivity.

In addition, when the permittivity is implemented to be different by adjusting the size of a dielectric crystal grain by widthwise position, the cross-section of the multilayer electronic component 100 in the first and third directions may be scanned by SEM and the sizes of crystal grains by widthwise position may be compared, thereby indirectly confirming the change in permittivity.

In an exemplary embodiment, when the average width of the first region 111c in the third direction is Wc and the average width of the internal electrodes 121 and 122 in the third direction is Wi, 0.3 ≤ Wc/Wi ≤ 0.9 may be satisfied. Accordingly, the capacitance improvement effect and the withstand voltage improvement effect may be further improved.

If Wc/Wi is less than 0.3, the capacitance improvement effect may be insufficient, and if Wc/Wi is more than 0.9, the withstand voltage improvement effect may be insufficient.

In an exemplary embodiment, the cover portion 112 and 113 may include the dielectric layer 111. That is, the cover portion 112 and 113 may be formed using the same ceramic green sheet as the ceramic green sheet for forming the dielectric layer 111 included in the capacitance formation portion Ac and the margin portions 114 and 115.

Accordingly, the first region of the dielectric layer included in the cover portion 112 and 113 may be disposed to connect the third surface and the fourth surface in the second direction, and the second region of the dielectric layer included in the cover portion may be disposed to connect the third surface and the fourth surface in the second direction.

However, the present disclosure is not limited thereto, and the cover portion may be formed using a ceramic green sheet different from the ceramic green sheet for forming the dielectric layer 111 included in the capacitance formation portion Ac and the margin portions 114 and 115.

The dielectric layer 111 may be formed by manufacturing a ceramic slurry including ceramic powder, an organic solvent, and a binder, applying and drying the slurry on a carrier film to prepare a ceramic green sheet, and then sintering the ceramic green sheet. The ceramic powder is not particularly limited as long as sufficient capacitance is obtained, but, for example, a barium titanate-based (BaTiO₃) powder may be used as the ceramic powder. For a more specific example, the ceramic powder may be a barium titanate-based (BaTiO₃) powder, a CaZrO₃-based paraelectric powder, etc. For more specific examples, the barium titanate (BaTiO₃) powder may be one or more of BaTiO₃, (Ba₁₋ₓCaₓ)TiO₃ (0<x<1), Ba(Ti_{1-y}Ca_{y})O3 (0<y<1), (Ba₁₋ₓCaₓ)(Ti_{1-y}Zr_{y})O₃ (0<x<1, 0<y<1) and Ba(Ti_{1-y}Zr_{y})O₃ (0<y<1), and the CaZrO₃-based paraelectric powder may be (Ca₁₋ₓSrₓ)(Zr_{1-y}Ti_{y})O₃ (0<x<1, 0<y<1) .

Accordingly, the dielectric layer 111 may include one or more of BaTiO₃, (Ba₁₋ₓCaₓ)TiO₃ (0<x<1), Ba(Ti_{1-y}Ca_{y})O3 (0<y<1), (Ba₁₋ₓCaₓ)(Ti_{x-y}Zr_{y})O₃ (0<x<1, 0<y<1), Ba(Ti_{1-y}Zr_{y})O₃ (0<y<1), and (Ca₁₋ₓSrₓ)(Zr_{1-y}Ti_{y})O₃ (0<x<1, 0<y<1). In an exemplary embodiment, the dielectric layer 111 may include (Ca₁₋ₓSrₓ)(Zr_{1-y}Ti_{y})O₃ (0<x<1, 0<y<1) as a main component.

Meanwhile, there is no need to specifically limit the method for controlling the permittivity of the dielectric layer 111 by widthwise position. For example, the permittivity may be controlled by varying the components, additive concentrations, etc. of the ceramic green sheet by widthwise position or by adjusting the sintering conditions, etc.

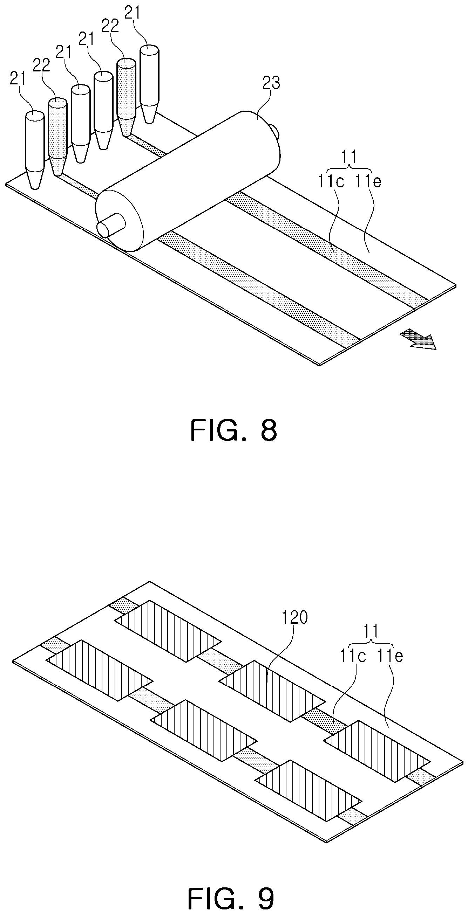

Referring to FIG. 8, which is a view illustrating a method for manufacturing a ceramic green sheet for manufacturing a multilayer electronic component according to an exemplary embodiment in the present disclosure, the ceramic green sheet 11 may be manufactured by separately preparing a slurry 11c for forming a first region and a slurry lie for forming a second region, simultaneously applying the slurry 11c for forming a first region and the slurry lie for forming a second region onto a carrier film through a plurality of nozzles 21 and 22, and compressing and drying the same through a roller 23. At this time, the slurry 11c for forming a first region may be applied through the first nozzle 22, and the slurry lie for forming a second region may be applied through the second nozzle 21.

Thereafter, as shown in FIG. 9, a ceramic green sheet for forming the capacitance formation portion Ac may be prepared by forming the internal electrode pattern 120 on the ceramic green sheet 11.

Thereafter, the ceramic green sheets may be stacked and compressed to obtain a stack 10', and then a portion to be the margin portion may be cut along the cutting line C1 and C2 into a unit chip size. Thereafter, the cut stack may be sintered to obtain a body, and then an external electrode may be formed to manufacture a multilayer electronic component 100.

The internal electrodes 121 and 122 may include first and second internal electrodes 121 and 122. The first and second internal electrodes 121 and 122 may be alternately disposed to face each other with the dielectric layer 111 forming the body 110 interposed therebetween and may be exposed to the third and fourth surfaces 3 and 4 of the body 110, respectively.

The first internal electrode 121 is spaced apart from the fourth surface 4 and exposed through the third surface 3, and the second internal electrode 122 may be spaced apart from the third surface 3 and exposed through the fourth surface 4. The first external electrode 131 may be disposed on the third surface 3 of the body and connected to the first internal electrode 121, and the second external electrode 132 may be disposed on the fourth surface 4 of the body and connected to the second internal electrode 122.

That is, the first internal electrode 121 is not connected to the second external electrode 132 but is connected to the first external electrode 131, and the second internal electrode 122 is not connected to the first external electrode 131 but is connected to the second external electrode 132. Therefore, the first internal electrode 121 may be formed at a predetermined distance from the fourth surface 4, and the second internal electrode 122 may be formed at a predetermined distance from the third surface 3. In addition, the first and second internal electrodes 121 and 122 may be disposed to be spaced apart from the fifth and sixth surfaces of the body 110.

The conductive metal included in the internal electrodes 121 and 122 may be at least one of Ni, Cu, Pd, Ag, Au, Pt, In, Sn, Al, Ti, and alloys thereof, and the present disclosure is not limited thereto.

The average thickness td of the dielectric layer 111 may not be limited, but may be, for example, 0.1 um to 10 um. The average thickness te of the internal electrodes 121 and 122 may not be limited, but may be, for example, 0.05 um to 3.0 um. In addition, the average thickness td of the dielectric layer 111 and the average thickness te of the internal electrodes 121 and 122 may be arbitrarily set according to the desired characteristics or purpose. For example, in the case of small IT electronic components to achieve miniaturization and high capacitance, the average thickness td of the dielectric layer 111 may be 0.4 um or less, and the average thickness te of the internal electrodes 121 and 122 may be 0.4 um or less.

The average thickness td of the dielectric layer 111 and the average thickness te of the internal electrodes 121 and 122 refer to the sizes of the dielectric layer 111 and the internal electrodes 121 and 122, respectively, in the first direction. The average thickness td of the dielectric layer 111 and the average thickness te of the internal electrodes 121 and 122 may be measured by scanning the cross-section of the body 110 in the first and second directions with a scanning electron microscope (SEM) at 10,000x magnification. More specifically, the average thickness td of the dielectric layer 111 may be measured as an average value by measuring the thicknesses at a plurality of points of one dielectric layer 111, for example, 30 equally spaced points in the second direction. In addition, the average thickness te of the internal electrodes 121 and 122 may be measured as an average value by measuring the thicknesses at a plurality of points of one internal electrode 121 and 122, for example, 30 equally spaced points in the second direction. The 30 equally spaced points may be designated in the capacitance formation portion Ac. Meanwhile, when these average value measurements are performed on each of 10 dielectric layers 111 and 10 internal electrodes 121 and 122 and then the average values are measured, the average thickness td of the dielectric layer 111 and the average thickness te of the internal electrodes 121 and 122 may be further generalized.

The external electrodes 131 and 132 may be disposed on the third surface 3 and the fourth surface 4 of the body 110.

The external electrodes 131 and 132 may include first and second external electrodes 131 and 132 disposed on the third and fourth surfaces 3 and 4 of the body 110 and connected to the first and second internal electrodes 121 and 122, respectively.

Referring to FIG. 1, the external electrodes 131 and 132 may be disposed to cover both end surfaces of the side margin portions 114 and 115 in the second direction.

In the present exemplary embodiment, a structure in which the multilayer electronic component 100 has two external electrodes 131 and 132 is described, but the number or shape of the external electrodes 131 and 132 may be changed depending on the shape of the internal electrodes 121 and 122 or other purposes.

Meanwhile, the external electrodes 131 and 132 may be formed using any material having electrical conductivity, such as metal, and a specific material may be determined by considering electrical characteristics, structural stability, etc., and further, the external electrodes 131 and 132 may have a multilayer structure.

For example, the external electrodes 131 and 132 may include electrode layers 131a and 132a disposed on the body 110 and plating layers 131b and 132b formed on the electrode layers 131a and 132a.

For a more specific example of the electrode layers 131a and 132a, the electrode layers 131a and 132a may be a firing electrode including a conductive metal and glass or a resin-based electrode including a conductive metal and resin.

In addition, the electrode layers 131a and 132a may be in the form of a firing electrode and a resin-based electrode sequentially formed on the body. In addition, the electrode layers 131a and 132a may be formed by transferring a sheet including a conductive metal onto the body or may be formed by transferring a sheet including a conductive metal onto the sintered electrode.

A material having excellent electrical conductivity may be used as the conductive metal included in the electrode layers 131a and 132a and is not particularly limited. For example, the conductive metal may be at least one of nickel (Ni), copper (Cu), and alloys thereof.

The plating layers 131b and 132b serve to improve the mounting characteristics. The type of the plating layers 131b and 132b is not particularly limited, may be plating layers including at least one of Ni, Sn, Pd, and alloys thereof, and may be formed in multiple layers.

For a more specific example of the plating layer 131b and 132b, the plating layer 131b and 132b may be a Ni plating layer or a Sn plating layer, and may be in a form in which a Ni plating layer and a Sn plating layer are sequentially formed on the electrode layers 131a and 132a or may be in a form in which a Sn plating layer, a Ni plating layer, and a Sn plating layer are sequentially formed. In addition, the plating layer 131b and 132b may include a plurality of Ni plating layers and/or a plurality of Sn plating layers.

### Method for Manufacturing Multilayer Electronic Component

FIG. 8 is a view illustrating a method for manufacturing a ceramic green sheet to manufacture a multilayer electronic component according to an exemplary embodiment in the present disclosure.

FIG. 9 illustrates a ceramic green sheet on which internal electrodes are printed.

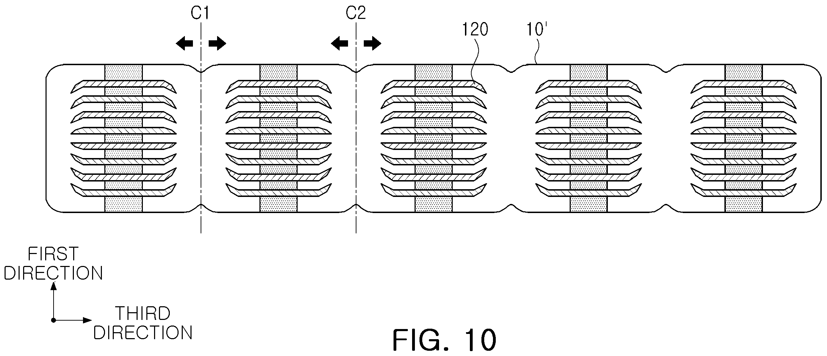

FIG. 10 is a view illustrating a cross-section of a stack in which the ceramic green sheet of FIG. 9 is stacked and compressed.

Hereinafter, a method for manufacturing a multilayer electronic component according to an exemplary embodiment in the present disclosure will be described with reference to FIGS. 8 to 10. However, the multilayer electronic component according to an exemplary embodiment in the present disclosure described above is not limited by the manufacturing method described below, and the same descriptions as those given above may be omitted to avoid redundant description.

Referring to FIG. 8, which is a view illustrating a method for manufacturing a ceramic green sheet to manufacture a multilayer electronic component according to an exemplary embodiment in the present disclosure, after the slurry 11c for forming a first region and the slurry lie for forming a second region are separately prepared, the slurry 11c for forming a first region and the slurry lie for forming a second region may be simultaneously applied onto a carrier film through a plurality of nozzles 21 and 22, and then, compressed through the roller 23 and dried to manufacture the ceramic green sheet 11. At this time, the slurry 11c for forming a first region may be applied through the first nozzle 22, and the slurry lie for forming a second region may be applied through the second nozzle 21.

However, the present disclosure is not limited to using two types of slurry, and three or more types of slurry with different compositions may be applied simultaneously through separate nozzles and compressed through a roller and dried to manufacture a ceramic green sheet.

Thereafter, as shown in FIG. 9, the internal electrode pattern 120 may be formed on the ceramic green sheet 11 to prepare a ceramic green sheet for forming the capacitance formation portion Ac.

A method for forming the internal electrode pattern 120 is not particularly limited, and as described above, the internal electrode pattern 120 may be formed by applying a conductive paste for an internal electrode including a conductive metal, and as the method for applying the conductive paste for an internal electrode, a screenprinting method or a gravure printing method may be used, and the present disclosure is not limited thereto.

The internal electrode pattern 120 forms the internal electrode 121 and 122 after the sintering process.

Thereafter, the ceramic green sheets are stacked and compressed to obtain a stack 10', and then a portion, which is to become a margin portion, may be cut into a unit chip size along the cutting lines C1 and C2. Thereafter, the cut stack may be sintered to obtain the body 110.

Next, the external electrodes 131 and 132 may be formed on the body 110 to manufacture the multilayer electronic component 100.

The method for forming the external electrodes 131 and 132 is not particularly limited, and the method for dipping in a paste including a conductive metal and glass may be used, or the external electrodes 131 and 132 may also be formed by transferring a sheet including a conductive metal. In addition, the external electrodes may be formed using a paste including a conductive metal and resin or by using an atomic layer deposition (ALD) method, a molecular layer deposition (MLD) method, a chemical vapor deposition (CVD) method, a sputtering method, etc.

In addition, a plating process may be additionally performed so that the external electrodes include the plating layers 131b and 132b.

As one of the various effects of the present disclosure, the reliability of the multilayer electronic component may be improved by making the widthwise central portion of the dielectric layer have a higher permittivity than the widthwise end portion.

As one of the various effects of the present disclosure, the capacitance of the multilayer electronic component may be improved.

Although the embodiments of the present invention have been described in detail above, the present invention is not limited to the embodiments described above and the accompanying drawings, but is intended to be limited by the appended claims. Accordingly, various forms of substitution, modification, and change may be made by those skilled in the art within the scope without departing from the technical idea of the present invention described in the claims, and this will also be considered to fall within the scope of the present invention.

The expression "an exemplary embodiment or one example" used in the present disclosure does not refer to identical examples and is provided to stress different unique features between each of the examples. However, examples provided in the following description are not excluded from being associated with features of other examples and implemented thereafter. For example, even if matters described in a specific example are not described in a different example thereto, the matters may be understood as being related to the other example, unless otherwise mentioned in descriptions thereof.

The terms used herein are for the purpose of describing particular embodiments only and are not intended to limit the example embodiments. As used herein, the singular forms "a," "an" and "the" are intended to include the plural forms as well, unless the context clearly indicates otherwise.

While example exemplary embodiments have been shown and described above, it will be apparent to those skilled in the art that modifications and variations could be made without departing from the scope of the present disclosure as defined by the appended claims.

## Claims

1. A multilayer electronic component comprising:
a body including a dielectric layer and internal electrodes alternately disposed with the dielectric layer; and
external electrodes disposed on length-wise opposing surfaces of the body,
wherein, when a widthwise central portion of the dielectric layer is a first region and widthwise end portions of the dielectric layer are second regions, the first region has a higher permittivity than the second regions.

2. The multilayer electronic component of claim 1, wherein
the body includes first and second surfaces opposing each other in a first direction, third and fourth surfaces connected to the first and second surfaces and opposing each other in a second direction, and fifth and sixth surfaces connected to the first to fourth surfaces and opposing each other in a third direction, and
includes a capacitance formation portion in which the dielectric layer and the internal electrodes are alternately disposed in the first direction, cover portions disposed above and below the capacitance formation portion in the first direction, and margin portions disposed at both sides of the capacitance formation portion in the third direction,
wherein the width direction is the third direction.

3. The multilayer electronic component of claim 2, wherein the first region is disposed to connect the third surface and the fourth surface in the second direction, and the second region is disposed to connect the third surface and the fourth surface in the second direction.

4. The multilayer electronic component of claim 2, wherein at least a portion of the second region is disposed to overlap the internal electrodes in the first direction.

5. The multilayer electronic component of claim 2, wherein the second region is disposed in the margin portion and the capacitance formation portion.

6. The multilayer electronic component of claim 2, wherein, when a region of the second region disposed in the capacitance formation portion is a 2a region and a region thereof disposed in the margin portion is a 2b region, the 2a region has a higher permittivity than the 2b region.

7. The multilayer electronic component of claim 2, wherein a permittivity gradually decreases from the first region to the second region.

8. The multilayer electronic component of claim 2, wherein the second region has a permittivity that gradually decreases away from the first region.

9. The multilayer electronic component of claim 2, wherein an average permittivity of the first region is in a range from 1.05 times to 1.6 times an average permittivity of the second region.

10. The multilayer electronic component of claim 2, wherein 0.3 ≤ Wc/Wi ≤ 0.9 in which when Wc is a width of the first region in the third direction and Wi is a width of the internal electrode in the third direction.

11. The multilayer electronic component of claim 2, wherein the dielectric layer has a maximum change in permittivity at a point at which the first region and the second region meet.

12. The multilayer electronic component of claim 11, wherein a rate of decrease in permittivity of the second region decreases away from the first region.

13. The multilayer electronic component of claim 11, wherein a rate of increase in permittivity of the first region decreases away from the second region.

14. The multilayer electronic component of claim 2, wherein the cover portion includes the dielectric layer.

15. The multilayer electronic component of claim 11, wherein the first region of the dielectric layer included in the cover portion is disposed to connect the third surface and the fourth surface in the second direction, and the second region of the dielectric layer included in the cover portion is disposed to connect the third surface and the fourth surface in the second direction.
